# EUROPEAN PATENT SPECIFICATION

(11) **EP 1 174 553 B1**
(45) Date of publication and mention of the grant of the patent: **15.03.2006**
(21) Application number: 01306277.3
(22) Date of filing: 20.07.2001
(51) Int. Cl.: E04B 2/74

(54) **Screen panel connectors**
Verbinder für Trennwandplatten
Connecteurs pour panneaux de cloison

(30) Priority: 20.07.2000 GB 0017906
(43) Date of publication of application: 23.01.2002
(73) Proprietor: Screen Solutions Limited, Peacehaven, East Sussex BN10 8JQ (GB)
(72) Inventor: Cafferkey, Matthew John, Hove BN3 3TN (GB); Grindall, Julian G., Ovingdean, Brighton BN2 7BE (GB)
(74) Representative: Leckey, David Herbert

(56) References cited:
- DE-A- 3 438 876
- DE-U- 7 119 423
- GB-A- 2 337 557
- US-A- 4 667 450

## Description

The present invention relates to connectors for screen panels and partitions, in particular to connectors which couple screen panels together to form a continuous series of screens, or which couple a screen panel to other articles such panel height adjusters or horizontal beams which suspend hung screen panels.

The use of screen panels to divide a space into a number of a different areas is well known, particularly in offices, public places, schools and the like. The screen panels may, for example, be used to provide individual work spaces, reception areas, meeting places and so on.

A typical screen panel system is modular in design with a number of screen panels connected together by suitable connectors to provide a desired division of space. This generally provides an inexpensive, attractive and convenient method of dividing a space into a number of discrete areas.

The screens themselves typically comprise rectangular panels which are provided at their perimeter with extruded edge profiles. The edge profiles define channels which run along at least part of the length of the panel edges.

A typical channel comprises a wide inner portion partially closed by shoulders formed at each side of the channel which define a narrower slot therebetween. By placing two panels edge to edge, the channel of one panel faces the channel of the other panel. In this position, one or more connectors can be introduced into the opposed channels which engage the shoulders of each channel and connect the panels together.

Various connectors have been proposed for connecting screen panels together. One known connector is described in United Kingdom patent application no. 2337557. This known connector comprises a flat elongate member integrally formed with two mushroom shaped lugs mid-way between its ends. The lugs extend from opposing faces of the elongate member and share a common axis. The elongate member thus forms a lever which can be used to rotate the lugs to lock the connector in place. Once two screen panels are position edge to edge, one or more of these connectors are introduced into the open ends of the adjacent channels with the levers held horizontally and with the heads of the mushroom shaped lugs located in the wide inner portions of each channel. The levers are then rotated to lie vertically so that bumps formed on the lugs engage the shoulders of each channel to lock the panels together. In this position the lever is hidden from view.

Several problems have however been identified with this particular design of connector. Firstly, the heads of the mushroom shaped lugs are sized to fit the wider inner portion of a channel of an edge profile and cannot pass through the narrower outer entry slot. This means that the lugs must be inserted into a channel at an open end. To connect two panels together, therefore, they must first be positioned edge to edge, then held in this position while sufficient connectors are introduced into the open ends of the channels, slid along the channels to their desired positions and rotated to lock them in place.

This method of assembly has several disadvantages. In particular, it is difficult to correctly align the screen panels prior to introducing the connectors. This alignment is usually judged visually by the user and if not accurate will prevent the insertion of connectors into the channels. In addition, for tall screen panels, even if they are correctly aligned, it may be difficult for the user to introduce this type of connector into an open end of the channels, which may for example be located some distance off the ground.

In some situations, it may be desirable to suspend the screen panels from a horizontal beam which in turn is suspended from the ceiling. The same or similar connectors can be used to connect screen panels to such a beam but, again, access to an open end of the channels along the tops of the panels may be restricted or unavailable.

Furthermore, this known connector can be unlocked by rotation of the integrally formed lever thus allowing the screen panels to be disengaged by unauthorised personnel which may cause a hazard to safety.

The present invention seeks to overcome or alleviate problems associated with this and other known screen panel connectors.

DE 34 38 876 discloses a panel connector in which a T-shaped member is inserted into a channel of one panel and an oppositely positioned T-shaped member is located into a channel of another panel. The panels are subsequently connected to each other by rotation of the connector.

DE-U-7119423 discloses a connector piece comprising a shaft with connector heads located at opposite ends and a tool engagement means located between the two connector heads. Two structures can be connected by this connector by rotating the connector after insertion of the connector heads into channels formed in the structures.

From a first aspect, the present invention provides means for coupling an article to a screen panel as claimed in claim 1.

Preferably the article is a further screen panel, the head portion is preferably a locking head portion and the screen panel connector preferably comprises a shaft, a locating head provided at one end of the shaft and which can be introduced into, and held in a desired location in, a channel of the further screen panel, the locking head being arranged at the other end of the shaft, a channel of the panel can be located over the locking head in a direction substantially perpendicular to the channel, the tool engaging means being provided on the shaft intermediate the locating head and the locking head and engageable by a tool to rotate the connector into a locked position to lock the two panels together.

In this way, the need to align both panels prior to introducing the connectors is avoided. Instead, a further panel can be positioned in its desired location, one or more connectors fixed in position in the channel of the further panel, and the panel then located over the connectors which are then locked in place.

The locking head may take any suitably form which can be introduced through the slot of the channel of the panel and locked in place, i.e the locking head is sized and shaped such that in one rotational orientation it can be introduced into a channel of a screen panel then rotated to another rotational orientation in which it cannot be removed from the channel. Suitable configurations may be generally rectangular or rhomboidal locking heads but more preferably the locking head is generally rectangular but with two opposed convex sides and rounded corners, i.e. generally lozenge-shaped.

The locking head is preferably provided with locking means. The locking means may for example comprise one or more raised areas formed on the locking head which are brought into engagement with a part of the channel of the panel when the connector is rotated. Preferably, in this arrangement the raised areas are formed on a face of the locking head so as to be brought into engagement with shoulders of the channel of the panel. Two opposed raised areas are preferably provided on the locking head which engage both shoulders of the channel on rotation.

Preferably the raised areas comprise ramps formed on the locking head such that, as the connector is turned, the locking head is progressively wedged into engagement within the channel. Preferably, two radially opposed ramps are provided which, on rotation of the connector, engage both shoulders of the channel of the screen panel.

The locating head may take any suitable form which can be held in place once positioned at a desired location in the channel of the first screen panel. In one preferred form the locating head is sized to fit within the wide inner portion of the channel of the screen panel but cannot pass through the narrower slot portion of the channel. Such a locating head therefore must be introduced into an open end of the channel but this does not provide a problem as in the prior art, since the end of the channel is easily accessible prior to positioning of the panels. The locating head may, for example, comprise a generally circular element of a diameter greater than the width of the slot portion of the channel. The circular shape of such a locating head facilitates rotation of the connector and locking of the locking head.

The mechanism for holding the connector in place on the further screen panel while the screen panel is positioned may take any suitable form. For connectors which possess locating heads which cannot pass through the slot portion of the channel of the further panel it is preferred that a friction fit is provided between a portion of the locating head and a portion of the edge profile of the channel of the further panel. This fit allows the connector to be slid along the channel to a desired position, but once released, friction provides sufficient support to hold the connector in place. Preferably the friction fit is provided between a face of the locating head and the shoulders of the channel of the further screen panel.

In a further arrangement, the shaft of the connector may be sized so as to engage frictionally with the entry slot of the channel and so retain the locating head in position.

In a yet further arrangement, the locating head may be shaped so that it can pass through the entry slot of a channel in one rotational orientation but is trapped in the channel in another rotational orientation. One suitable shape would be generally rectangular. Preferably, however, such a locating head is generally lozenge shaped, as described above in relation to the locking head. This avoids the need to introduce the locating head at an open end of the channel. For this form of connector, instead of providing a friction fit, it is preferred that the locating head has means which can selectively engage the channel to support the connector on the further screen panel. Preferably these means are configured to engage and disengage the channel by rotation of the connector. It will be apparent that the means on the locating head which selectively engage the channel may take any of the forms of the locking means on the locking head as previously described. The locating head may, therefore, have an identically configuration to the locking head.

Where the connector is provided with a locating head which is supported in a channel by rotation as described above, then the axis of the locating head and the locking head should be offset from one another around the rotational axis of the connector. Preferably this offset is 30° to 40°. By providing an offset, the locating head can be introduced into the channel of a further panel, rotated say 30° until fixed in place with the locking head vertically aligned. In this position, the channel of the screen can be located over the locking head and the connector rotated, say a further 30°, to lock the locking head in the channel of the screen panel. In this position the connector is fully locked and the panels are coupled. Care must be taken, however, when rotating the connector to lock the locking head, to rotate the connector in the correct direction as otherwise the locating head may become disengaged from the further screen panel. For this reason it is preferred that the locating head comprises a disc-shaped element that cannot pass through the slot of a channel and is provided with a friction fit.

The tool engaging means may take any suitable form. For example, the tool engaging means may comprise a generally nut-shaped element extending outwardly from the connector shaft, say of a hexagonal or square shape for engagement with a tool specifically designed for use with a connector according to the preferred embodiment or with a conventional too, such as a spanner.

In a preferred embodiment, the tool engaging portion comprises a generally diamond or kite-shaped element that extends outwardly from the connector shaft. A diamond shaped tool engaging portion has been found to have advantages over other shapes of tool engaging portion. In particular, when engaged by a spanner-like tool, a diamond shaped tool engaging portion allows sufficient turning force to be applied to rotate the connector whilst reducing the risk of the tool causing damage to the tool engaging portion, such as unwanted flattening of the corners of the tool engaging portion.

The problem of damaging the connector during rotation by a tool may also be addressed by manufacturing the connector from a relatively hard/durable material, for example from a sufficiently hard/durable plastic, metal or metal alloy.

The tool engaging means forms a first gap with the locating head, and a second gap with the locking head. When in use these gaps receive the shoulders of the channels and are preferably sized to do so snugly. Preferably, the first gap between the locating head and the tool engaging means is dimensioned to provide an friction fit with the shoulders of the channel of the further panel so that the connector can be slid along the channel to its desired location but once released is held in position by the frictional forces between the locating head, the tool engaging means and the shoulders of the first channel.

It will be apparent that in use, with the shoulders of the channels received in the first and second gaps, the tool engaging means is located in a third gap formed between the two screen panels. This third gap is defined by the width of the tool engaging means and is preferably sufficiently narrow not to spoil the aesthetic appearance of the assembled panels but sufficiently wide to allow insertion of a tool to engage the tool engaging means and turn the connector.

The tool engaging means is preferably positioned generally half way along the shaft..

The shaft of the connector may take any suitable cross sectional shape, for example circular. It may have a diameter slightly less than the width of a channel slot, so as to allow the connector to be easily rotated.

The shaft is not axisymmetrical in cross section but has extensions to provide a cross section which is elongated generally along one axis. For example it may be generally rhomboidal having a rounded diamond shaped cross section. The extensions are dimensioned such that they allow the connector only to be rotated by a predetermined amount, rotation beyond this predetermined amount then prevented by the extensions engaging with the shoulders of the channels. This is designed to occur when the connector is fully locked and thus provides a positive indication that the connector is correctly locked in place. Preferably, the maximum rotation permitted is 90° from the initial orientation of the connector.

It will be apparent that the process of coupling screen panels using a connector as described is advantageous over previous construction methods.

According to a further aspect of the present invention there is provided a method as claimed in claim 22.

A method for connecting screen panels is further disclosed comprising positioning a first screen panel, positioning a locating head of a connector in a channel of the first screen panel, positioning the channel of a second screen panel over a locking head of the connector, and engaging tool engaging means formed on the connector to rotate the connector into a locked position to lock the screen panels together.

A preferred embodiment has thus far been described in relation to the coupling of two adjacent screen panels. It will be apparent, however, that there are other uses for a connector which provides a locking head capable of being locked into position within a channel of a screen panel by rotation of tool engaging means formed on the connector.

The locating means may for example be adapted to engage articles other than the channel of a screen panel thus allowing such articles to be locked in place at the edge of a screen panel by rotation of the tool engaging means.

The locking head may take any suitable form and may for example be as previously described. One application is the coupling of a panel height adjustor to the lower edge of a screen panel. Preferably, in this application the locking head is generally circular in cross section, i.e. of a similar shape to the preferred form of the previously described locating means. In this way, once the locking head is received within the channel along the lower edge of a screen it will not fall out and can only be removed from an open end of the edge profile. The locking head is again formed with locking means which may take any suitable form and may be as previously described. The tool engaging means may take any suitable form and, again, may be formed as described in the previous aspect.

The attachment means may take any suitable form. When used to attach a height adjustor, preferably the attachment means comprises an aperture into which a bolt of a height adjustor can be inserted. The aperture is preferably a threaded aperture and receives a threaded bolt of the height adjustor. The aperture is preferably formed on one face of the tool engaging means, the other face being formed with a shaft leading to the locking head. The shaft of the connector may be formed as previously described and the height adjustor may be a conventional height adjuster.

A method for coupling an article to a screen panel is further disclosed comprising attaching the article to a connector, positioning a locking head of the connector in a channel of a screen panel, and engaging tool engaging means formed on the connector to rotate the connector into a locked position to lock the article and the screen panel together.

In all aspects of the present invention, the connector may be made from any suitable material of sufficient strength and durability. Preferably the connector is integrally formed as a one piece unit from injection moulded plastic. When used to attach a height adjustor, the aperture for receiving a bolt of a height adjuster is preferably machined after the initial moulding of the element since this is more cost effective.

Some embodiments of the invention will now be described, by way of example only, with reference to the accompanying drawings in which:
Fig. 1 illustrates a preferred form of the present invention and shows a connector with a circular locating head and a lozenge-shaped locking head;
Fig. 2 illustrates the connector shown in Fig. 1 from an alternative viewpoint;
Fig. 3 illustrates a sectional view of the connector of Figs. 1 and 2 showing the cross sectional shape of the shaft in relation to the lozenge-shaped locking head and tool engaging means;
Figs. 4 to 11 illustrate the step by step application of the connector of Figs. 1 to 3 in use;
Fig. 12 shows an alternative form of the present invention in which the locking head and the locating head are rotationally offset and are each provided with locking formations in the form of ramps;
Fig. 13 illustrates an alternative form the present invention and shows a connector for attaching a conventional height adjustor to the lower edge of a screen panel;
Fig. 14 illustrates the connector shown in Fig. 13 when positioned on the lower edge of a screen to receive a standard height adjustor;
Figs. 15 to 17 illustrate a preferred embodiment of the present invention in which the connector has a diamond shaped tool engaging portion.

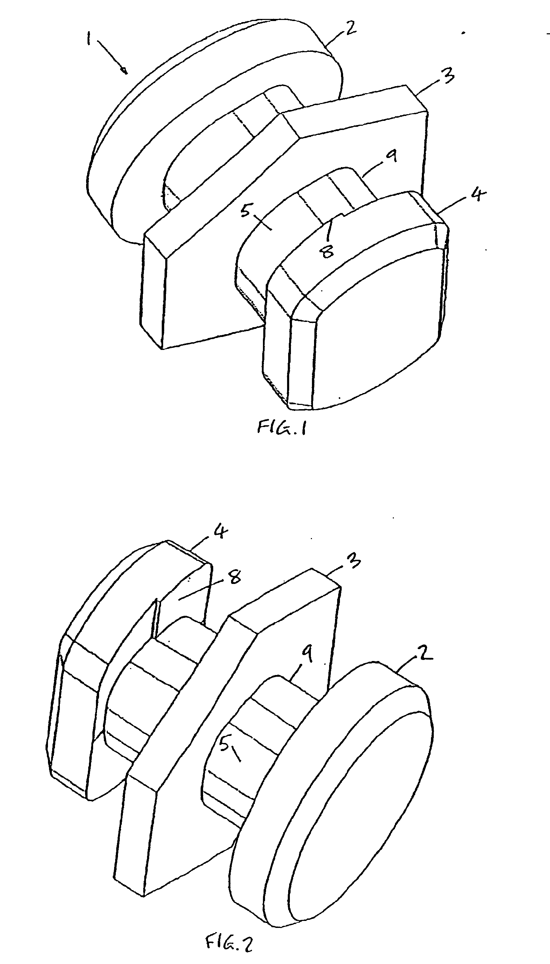

Figures 1 and 2 show alternative views of a preferred form of the present invention. As can be seen, the connector 1 comprises a locating head 2 adapted for location within a channel of a first screen panel, a locking head 4 adapted to be locked in a channel of a second screen panel, and tool engaging means 3 for engagement with a tool to rotate the connector and lock the locking head 4 within the channel of the second screen panel.

The locating head 2 is formed at one end of a shaft 5 and the locking head 4 is formed at the other end of the shaft 5. The tool engaging means 3 is formed on the shaft 5 approximately half way between the locating head 2 and locking head 4.

The locating head 2 comprises a generally circular, disc-shaped formation which is sized to snugly fit within the channel of the first screen panel. The circular locating head 2 facilitates rotation of the connector about the longitudinal axis of the shaft 5.

The tool engaging means 3 comprises a planar element of hexagonal shape formed mid-way between the locating head 2 and the locking head 4. The tool engaging means 3 is shaped to be engaged by a tool and rotated to lock the connector in place.

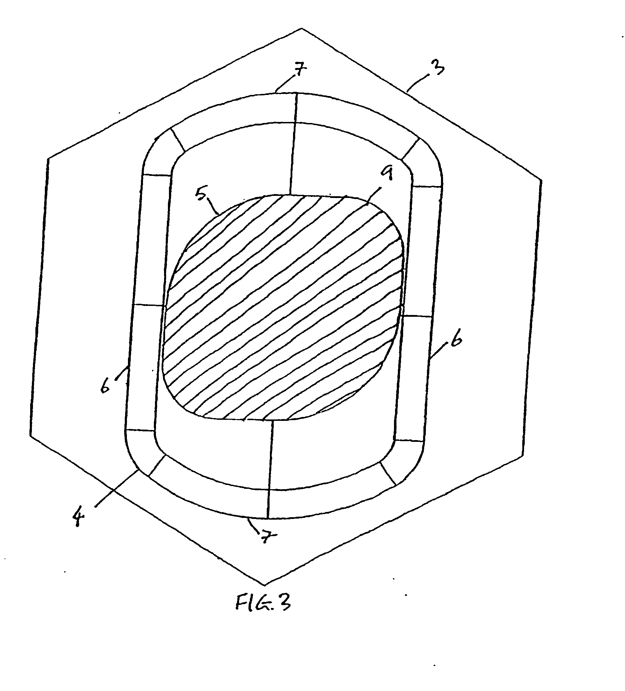

The locking head 4 comprises a generally planar lozenge-shaped element which in cross section, as best seen in Fig. 3, has two longer opposing parallel sides 6 and two shorter opposing convex sides 7. The locking head 4 is provided with locking means in the form of two radially opposed shallow ramps 8. These ramps 8 extend from the locking head 4 into the gap between the locking head 4 and the tool engaging means 3.

Fig. 3 illustrates a sectional view of the connector shown in Figures 1 and 2. As can be seen, the shaft 5 has a generally circular cross section but is formed with two radially opposed extensions 9 which give the shaft 5 a rounded diamond-like shape.

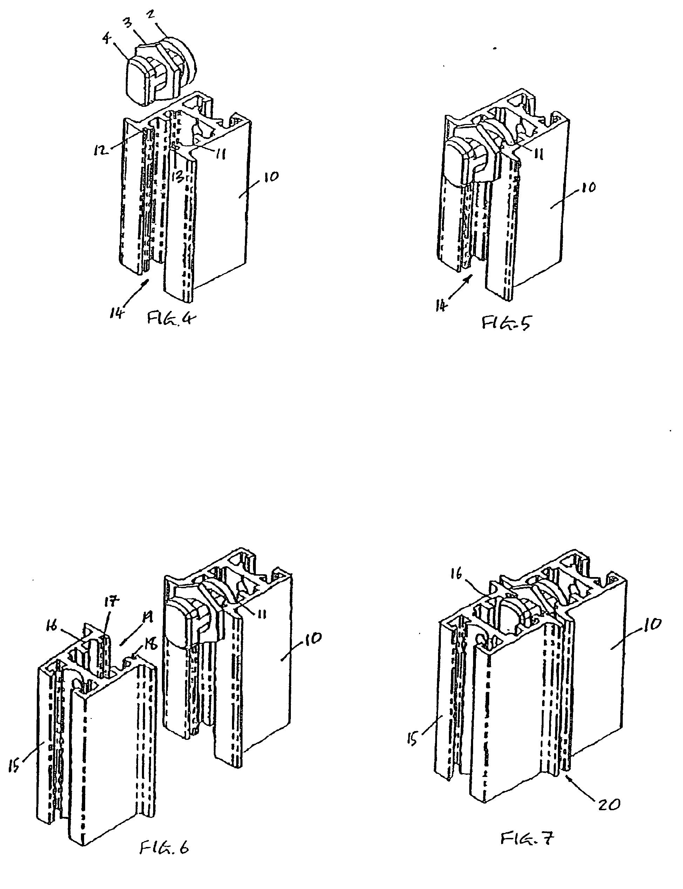

Figs. 4 to 11 illustrate the steps required to couple the edge profile 10 of a first panel to the edge profile 15 of a second panel using a connector according to the preferred embodiment. In these figures only the edge profiles 10, 15 of the two panels are shown for clarity. The edge profile 10 of the first panel comprises an extruded member, e.g. of aluminium, with a channel comprising a wide inner portion 11 partially enclosed by two shoulders 12, 13 formed at either side of the channel and which define a narrower outer entry slot 14 therebetween. The edge profile 15 of the second panel is identical to that of the first panel and defines a channel comprising a wide inner portion 16, shoulders 17, 18 and a narrower outer entry slot 19.

With the first panel in place, the locating head 2 of a connector is inserted into the open end of the inner portion 11 of the channel of the edge profile 10 which runs along the side of the first panel. Each shoulder 12, 13 of this channel has a thickness extending from an exterior surface of the edge profile 10 and terminating at the wide inner portion 11 of the channel of the edge profile 10. The gap between the locating head 2 and the tool engaging means 3 on the connector is arranged to be slightly smaller than the thickness of each shoulder 12, 13. The connector can be slid along the channel to its desired location but once positioned there are sufficient frictional forces between the locating head 2, the shoulders 12, 13 and the tool engaging means 3 for the connector to remain in position once released.

With sufficient connectors positioned along the side of the first screen panel, and with the lozenge-shaped locking head 4 of each connector aligned vertically, the second screen panel is offered up to the exposed locking heads 4 which are received in the wide inner channel portion 16 of the channel which runs along the side of the second screen panel. In this position the tool engaging means 3 of each connector define a gap 20 between the two panels into which a tool can be inserted to engage the tool engaging means 3 and rotate the connectors.

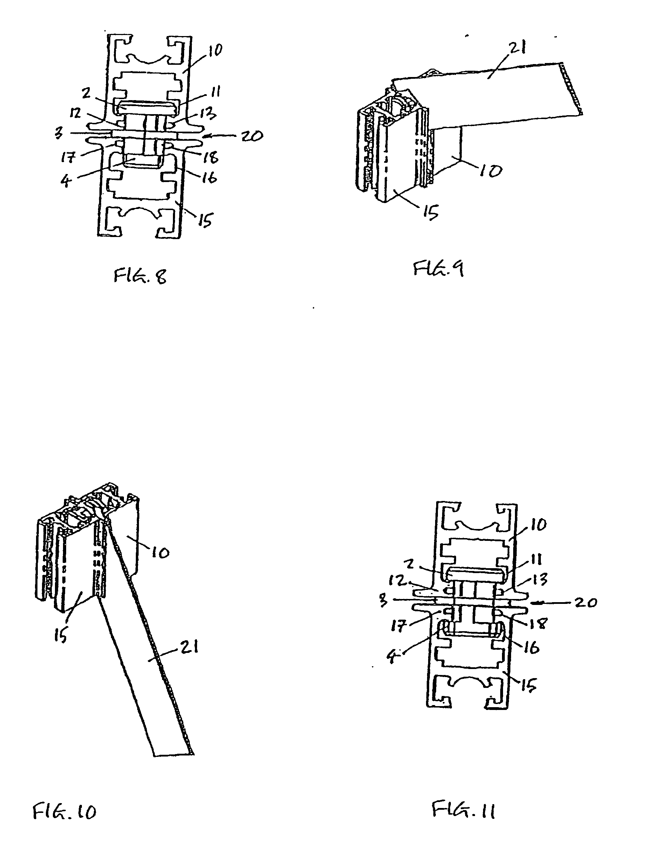

Fig. 8 shows a horizontal section through the assembly shown in Fig. 7, i.e. with a connector and the panels in place but prior to locking of the connector. It can be seen that the lozenge-shaped locking head 4 extends generally vertically and so the shoulders 17, 18 of the edge profile of the second panel are not gripped between the locking head 4 and the tool engaging means 3.

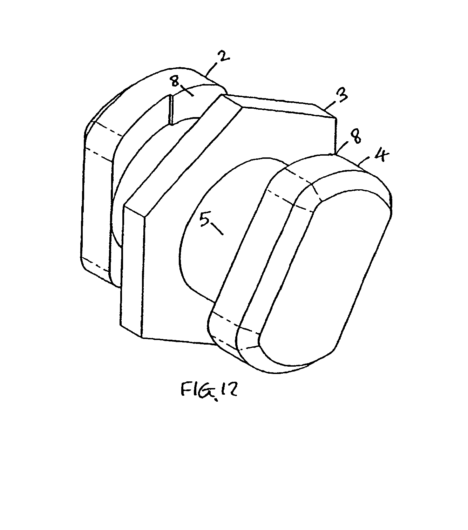

Figs. 9 and 10 illustrate the engagement of the connector by a tool 21 and the rotation of the connector into its locked position, which is shown in Fig. 11. It can be seen from this figure that the lozenge-shaped locking head 4 of the connector extends generally horizontally and thus the shoulders 17, 18 of channel of the second screen panel are gripped between the ramps 8 of the locking head 4 and the tool engaging means 3 to lock the connector in position.

To uncouple two connected screen panels the above steps are repeated in reverse.

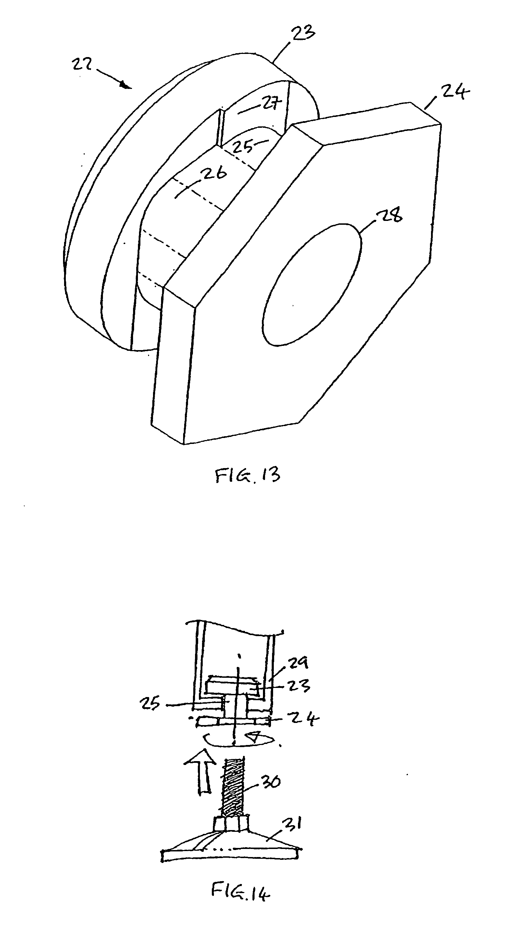

Fig. 12 illustrates an alternative form of connector in accordance with a preferred embodiment. This connector is similar to that previously described however both the locating head 2 and locking head 4 are formed with locking means comprising a pair of radially opposed ramps 8. The locating head 2 and the locking head 4 are formed as lozenge-shaped elements at each end of shaft 5. Again, the connector is formed with a hexagonally-shaped tool engaging means 3 located approximately half way along the shaft 5.

It can be seen from Fig. 12 that the locking means of the locking head 4 are rotationally offset with respect to the locking means of the locating head 2. This rotationally offset is about 30° - 40°. The provision of this offset allows the locating head 2 to be inserted into the side channel of a first screen panel then, once correctly positioned, rotated by 30° - 40° to secure the locating head 2 in position. In this position the locking head 4 is generally vertically aligned. As in the previous embodiment, with the connectors in position and the locking heads vertically aligned a second panel can be positioned over the locking heads 2 of the connectors and the connectors further rotated to lock the panels in place whilst maintaining engagement of the locking means 14 with the channel of the first panel. It should be understood that such a connector formed with offset locking means on both the locating head 2 and the locking head 4 does not necessarily have to possess a locating head 2 that can pass through the entry slot of a channel but may in fact be formed with a disc shaped locating head as previously described.

Fig. 13 illustrates a further embodiment of the present invention in which the connector is adapted to couple a height adjustor to the lower edge of a screen panel. In this embodiment the connector comprises a generally circular, disc-shaped locking head 23 formed with locking means 27 comprising two radially opposed ramps as previously described. The locking head 23 is formed at one end of a shaft 25. Again, the shaft 25 has a generally circular cross section but is formed with two radially opposed ridges 26 which provide the shaft with a generally rounded diamond-shaped cross section. A hexagonally shaped tool engaging formation 24, as previously described, is formed at the opposite end of the shaft 25. In this embodiment, instead of providing a locating head for coupling with a screen panel, the connector has a threaded aperture 28 for coupling the connector to a height adjustor.

As shown in Fig. 14, the height adjustor comprises a foot 31 attached to a generally vertically extending threaded bolt 30. The connector is inserted into the channel of the edge profile along the lower edge of a screen panel such that the locking head 23 is trapped within the channel and the tool engaging means 24 and the aperture 28 extend from the bottom of the screen panel. The connector is then slid to its desired location and rotated using a tool to lock the connector in place. The threaded bolt 30 of the height adjustor is then screwed into the threaded aperture 28 of the connector to couple the height adjustor to the screen panel. To change the location of the height adjustor, the connector is rotated to disengage its locking formations 27 after which the connector can be slid to a new location.

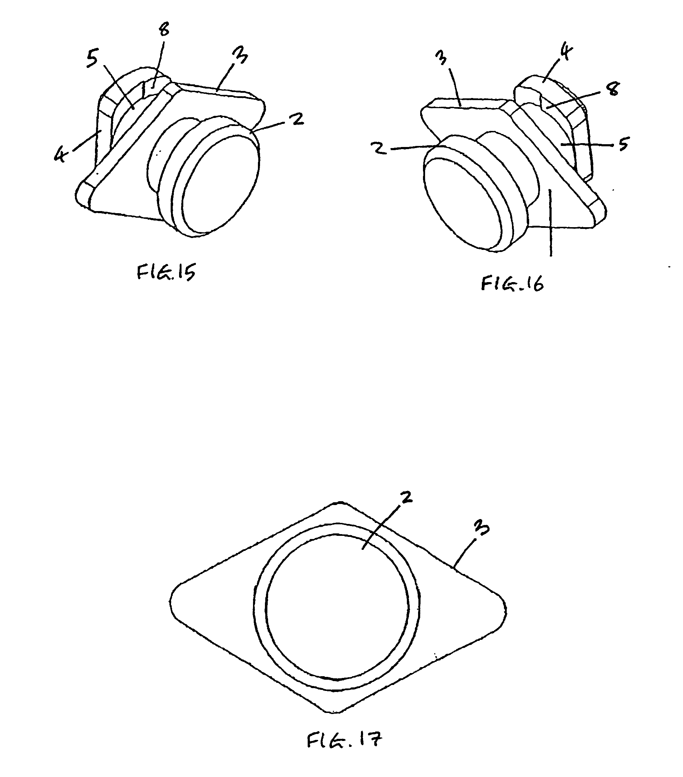

Figures 15 to 17 show a preferred embodiment of the present invention in which the connector possesses a diamond shaped tool engaging portion 3 located between the locating head 2 and the locking head 4. A tool for engaging such a connector may comprise a spanner-like tool capable of engaging two opposed edges of the tool engaging portion 3 in order to rotate the connector.

The diamond shape of the tool engaging portion 3 is advantageous over certain other shapes of tool engaging portion, such as square or hexagonal, since it can help to reduce damage to the tool engaging portion during rotation of the connection by a tool.

Although the present invention has been described with reference to preferred embodiments, it will be understood by those skilled in the art that various changes in form and detail may be made without departing from the scope of the claims.

## Claims

1. Means for coupling an article (10;31) to a screen panel (15;29) comprising:
a channel provided on the screen panel (15;29) and comprising channel shoulders (17,18); and
a connector (1;22) comprising:
a head portion (4;23) receivably in said channel;
a tool engagement means (3;24) engageable by a tool (21) to rotate the connector (1;22) into a locked position to lock the article (10;31) to the screen panel (15;29);
a shaft (5;25) connecting the head portion (4;23) and the tool engagement means (3;24); and
means (2;28) for coupling the connector (1;22) to the article (10;31);
**characterised by**:
said shaft (5;25) comprising formations (9;26) dimensioned such as to permit a predetermined amount of rotation of said connector (1;22) and to prevent rotation beyond this predetermined amount by engagement of the formations (9;26) with said shoulders (17,18).

2. Means for coupling as claimed in claim 1, wherein said article (10) is a further screen panel, wherein said head portion (4) is a locking head portion, said connector (1) further comprising a locating head (2) provided at one end of the shaft (5) which can be introduced into, and held in a desired location in, a channel of said further screen panel (10); the locking head (4) being arranged at the other end of the shaft (5), the channel of said panel (15) can be located over the locking head (4) in a direction substantially perpendicular to the channel, the tool engaging means (3) being provided on the shaft (5) intermediate the locating head (2) and the locking head (4) and engageable by a tool (21) to rotate the connector (1) into a locked position to lock the two panels (10,15) together.

3. Means for connecting as claimed in claim 2, wherein the locking head (4) is generally rectangular or generally lozenge-shaped.

4. Means for connecting as claimed in claim 2 or 3, wherein the locking head (4) includes locking means (8) comprising one or more raised areas formed on the locking head (4) which can be brought into engagement with a part of the channel of the panel (15) when the connector (1) is rotated.

5. Means for connecting as claimed in claim 4, wherein the locking means (8) comprises two radially opposed ramps which engage both shoulders (17,18) of the channel of the panel (15) on rotation of the connector (1) to progressively wedge the locking head (4) in the channel of the panel (15).

6. Means for connecting as claimed in any of claims 2 to 5, wherein the locating head (2) is sized so that it fits within a wide inner portion of the channel of the further panel (10) by cannot pass through a narrower slot portion (14) of the channel of the further screen panel (10).

7. Means for connecting as claimed in claim 6, wherein the locating head (2) comprises a generally circular element of a diameter greater than the width of the slot portion (14) of the channel of the further panel (10).

8. Means for connecting as claimed in any of claims 2 to 7, wherein a friction fit is provided between a portion of the locating head (2) and a portion of the channel of the further panel (10).

9. Means for connecting as claimed in any of claims 2 to 8, wherein the shaft (5) of the connector (1) is sized so as to engage frictionally with the entry slot (14) of the channel of the further panel (10) and so retain the locating head (2) in position.

10. Means for connecting as claimed in any of claims 2 to 5, wherein the locating head (2) has engagement means (8) which can selectively engage the channel of the further panel (10) to support the connector on the further panel (10).

11. Means for connecting as claimed in claim 10, wherein the locating head (2) is shaped so that it can pass through the entry slot (14) of the channel of the further panel (10) in one rotational orientation but is trapped in the channel in a different rotational orientation.

12. Means for connecting as claimed in claim 11, wherein the locating head (2) is generally rectangular or generally lozenge shaped.

13. Means for connecting as claimed in claim 12, wherein the axis of the locating head (2) and the locking head (4) are offset from one another around the rotational axis of the connector (1).

14. Means for connecting as claimed in any of claims 10 to 13, wherein the engagement means (8) comprises one or more raised areas formed on the locating head (2) which are brought into engagement with a part of the channel of the further panel (10) when the connector (1) is rotated.

15. Means for connecting as claimed in claim 14, wherein the engagement means (8) comprises two opposed ramps provided on the locating head (2) which engage both shoulders (12,13) of the channel of the further panel (10) on rotation to progressively wedge the locating head (2) into the channel of the further panel (10).

16. Means for connecting as claimed in any preceding claim, wherein the tool engaging means (3) comprises a generally nut-shaped element extending outwardly from the connector shaft (5).

17. Means for connecting as claimed in claim 16, wherein the tool engaging means (3) has a generally hexagonal, square or diamond shape.

18. Means for connecting as claimed in any of claims 2 to 17, wherein the gap is provided between the tool engaging means (3) and the locating head (2), wherein the gap is dimensioned to provide a friction fit with the shoulders (12,13) of the channel of the further panel (10).

19. Means for connecting as claimed in any preceding claim, wherein said formations (9;26) include extensions that provide a cross section which is elongated generally along one axis.

20. Means for connecting as claimed in claim 19, wherein the shaft (5;25) of the connector is generally rhomboidal having a rounded diamond shaped cross section such that the connector can only be rotated by a predetermined amount.

21. Means for connecting as claimed in any of claims 2 to 20, wherein the locking head (5) is generally circular in cross section.

22. A method for coupling an article (10;31) to a screen panel (15;29) comprising attaching the article (10;31) to a connector (1;22), positioning a locking head (4;23) of the connector (1;22) in a channel of said screen panel (5;29), engaging tool engaging means (3;24) formed on the connector (1;22) to rotate the connector (1;22) into a locked position to lock the article (10;31) and the screen panel (15;29) together,
**characterised by**:
engaging formations (9;26) provided on a shaft (15;25) connecting the locking head (4;23) and the tool engagement means (3;24) with shoulders (17,18) provided on said channel after rotation of said connector (1;22) by a predetermined amount so that rotation beyond this predetermined amount is prevented.

23. A method as claimed in claim 22, wherein said article (10) is a further screen panel, the method further comprising positioning the further screen panel (10), positioning a locating head (2) of the connector (1) in a channel of the further screen panel (10), wherein the step of positioning a locking head (4) of the connector (1) in a channel of the screen panel (15) comprises positioning the channel of the screen panel (15) over a locking head (4) of the connector (1).

24. The method or means for coupling as claimed in any of claim 1 to 22 wherein the article (31) is a screen panel height adjustor.

## Patentansprüche

1. Kopplungsmittel zum Koppeln eines Bauteils (10; 31) mit einem Trennwandelement (15; 29);
mit einem an dem Trennwandelement (15; 29) angeordneten Kanal, der Kanalschultern (17, 18) aufweist, und
mit einem Verbindungselement (1; 22),
das einen in den Kanal einführbaren Kopfabschnitt (4; 23),
ein Werkzeugangriffsmittel (3; 24), an dem ein Werkzeug (21) angreifen kann, um das Verbindungselement (1; 22) in eine verriegelte Position zu drehen, in der das Bauteil (10; 31) mit dem Trennwandelement (15; 29) verriegelt ist,
eine den Kopfabschnitt (4; 23) und das Werkzeugangriffsmittel (3; 24) miteinander verbindende Welle (5; 25), und
Mittel (2; 28) zum Koppeln des Verbindungselementes (1; 22) mit dem Bauteil (10; 31) aufweist;
**dadurch gekennzeichnet, dass**
die Welle (5; 25) Formelemente (9; 26) aufweist, die so dimensioniert sind, dass sie eine Verdrehung des Verbindungselementes (1; 22) um einen vorbestimmten Betrag zulassen, eine Verdrehung über desen Betrag hinaus jedoch durch Angreifen der Formelemente (9; 26) an den Schultern (17, 18) nicht zulassen.

2. Kopplungsmittel nach Anspruch 1, **dadurch gekennzeichnet, dass** das Bauteil (10) ein weiteres Trennwandelement und der Kopfabschnitt (4) ein Verriegelungskopfabschnitt ist; dass das Verbindungselement (1) außerdem an einem Ende der Welle (5) einen Lokalisierungskopf (2) aufweist, der in einen Kanal des weiteren Trennwandelementes (10) eingeführt und in diesem in einer gewünschten Position gehalten werden kann; dass der Verriegelungskopf (4) an dem anderen Ende der Welle (5) angeordnet ist, der Kanal des Trennwandelementes (15) über dem Verriegelungskopf (4) in einer Richtung positioniert werden kann, die im wesentlichen rechtwinklig zum Kanal verläuft, und das Werkzeugangriffsmittel (3) auf der Welle (5) zwischen dem Lokalisierungskopf (2) und dem Verriegelungskopf (4) angeordnet und durch Angriff eines Werkzeuges (21) das Verbindungselement (1) in eine verriegelte Position verdreht werden kann, um die beiden Trennwandelemente (10, 15) miteinander zu verriegeln.

3. Verbindungsmittel nach Anspruch 2, **dadurch gekennzeichnet, dass** der Verriegelungskopf (4) im wesentlichen rechteckig oder im wesentlichen rautenförmig ist.

4. Verbindungsmittel nach Anspruch 2 oder 3, **dadurch gekennzeichnet, dass** der Verriegelungskopf (4) Verriegelungsmittel (8) enthält, die einen oder mehrere auf dem Verriegelungskopf geformte angehobene Bereiche aufweisen, die in Angriff mit einem Teil des Kanals des Trennwandelementes (15) gebracht werden können, wenn das Verbindungselement (1) verdreht wird.

5. Verbindungsmittel nach Anspruch 4, **dadurch gekennzeichnet, dass** die Verriegelungsmittel (8) zwei radial einander gegenüberliegende Rampen aufweisen, die beim Verdrehen des Verbindungselementes (1) an beiden Schultern (17, 18) des Kanals des Trennwandelementes (15) angreifen, um den Verriegelungskopf (4) in dem Kanal des Trennwandelementes (15) progressiv zu verkeilen.

6. Verbindungsmittel nach einem der Ansprüche 2 bis 5, **dadurch gekennzeichnet, dass** der Lokalisierungskopf (2) eine solche Größe hat, dass er in den breiten inneren Teil des Kanals des weiteren Trennwandelementes (10) passt, aber nicht durch einen engeren Schlitzabschnitt (14) des Kanals des weiteren Trennwandelementes (10) hindurch passt.

7. Verbindungsmittel nach Anspruch 6, **dadurch gekennzeichnet, dass** der Lokalisierungskopf (2) ein im wesentlichen kreisförmiges Element enthält, dessen Durchmesser größer als die Breite des Schlitzabschnittes (14) des Kanals des weiteren Trennwandelementes (10) ist.

8. Verbindungsmittel nach einem der Ansprüche 2 bis 7, **dadurch gekennzeichnet, dass** zwischen einem Teil des Lokalisierungskopfes (2) und einem Teil des Kanals des weiteren Trennwandelementes (10) eine reibschlüssige Verbindung vorgesehen ist.

9. Verbindungsmittel nach einem der Ansprüche 2 bis 8, **dadurch gekennzeichnet, dass** die Welle (5) des Verbindungselementes (1) eine solche Größe hat, dass sie reibungsschlüssig in den Eingangsschlitz (14) des Kanals des weiteren Trennwandelementes (10) eingreift und damit den Lokalisierungskopf (2) in Position hält.

10. Verbindungsmittel nach einem der Ansprüche 2 bis 5, **dadurch gekennzeichnet, dass** der Lokalisierungskopf (2) Angriffsmittel (8) aufweist, die selektiv am Kanal des weiteren Trennwandelementes (10) angreifen, um das Verbindungselement an dem weiteren Trennwandelement (10) zu haltern.

11. Verbindungsmittel nach Anspruch 10, **dadurch gekennzeichnet, dass** der Lokalisierungskopf (2) eine solche Form hat, dass er in einer Drehlagedurch den Eingangsschlitz (14) des Kanals des weiteren Trennwandelementes (10) passt, aber in einer anderen Drehlage in dem Kanal festgehalten wird.

12. Verbindungsmittel nach Anspruch 11, **dadurch gekennzeichnet, dass** der Lokalisierungskopf (2) im wesentlichen rechteckig oder im wesentlichen rautenförmig ist.

13. Verbindungsmittel nach Anspruch 12, **dadurch gekennzeichnet, dass** die Achse des Lokalisierungskopfes (2) und der Verriegelungskopf (4) um die Drehachse des Verbindungselementes (1) gegeneinander versetzt sind.

14. Verbindungsmittel nach einem der Ansprüche 10 bis 13, **dadurch gekennzeichnet, dass** die Angriffsmittel (8) einen oder mehrere auf dem Lokalisierungskopf (2) geformte angehobene Bereiche aufweisen, die in Angriff mit einem Teil des Kanals des weiteren Trennwandelementes (10) gebracht werden, wenn das Verbindungselement (1) verdreht wird.

15. Verbindungsmittel nach Anspruch 14, **dadurch gekennzeichnet, dass** die Angriffsmittel (8) auf dem Lokalisierungskopf (2) zwei einander gegenüberliegende Rampen aufweisen, die beim Verdrehen an beiden Schultern (12, 13) des Kanals des weiteren Trennwandelementes (10) angreifen, um den Lokalisierungskopf (2) in dem Kanal des weiteren Trennwandelementes (15) progressiv zu verkeilen.

16. Verbindungsmittel nach einem der vorstehenden Ansprüche, **dadurch gekennzeichnet, dass** die Werkzeugangriffsmittel (3) ein im wesentlichen mutterförmiges Element enthalten, das sich von der Welle (5) des Verbindungselementes nach außen erstreckt.

17. Verbindungsmittel nach Anspruch 16, **dadurch gekennzeichnet, dass** die Werkzeugangriffsmittel (3) eine im wesentlichen sechseckige, quadratische oder rautenförmige Form aufweisen.

18. Verbindungsmittel nach einem der Ansprüche 2 bis 17, **dadurch gekennzeichnet, dass** zwischen dem Werkzeugangiffsmittel (3) und dem Lokalisierungskopf (2) ein Spalt vorhanden ist, der so dimensioniert ist, dass er einen Reibungssitz mit den Schultern (12, 13) des Kanals des weiteren Trennwandelementes (10) bildet.

19. Verbindungsmittel nach einem der vorstehenden Ansprüche, **dadurch gekennzeichnet, dass** die Formelemente (9; 26) Verlängerungen aufweisen, die einen Querschnitt bilden, der etwa entlang einer Achse verlängert ist.

20. Verbindungsmittel nach Anspruch 19, **dadurch gekennzeichnet, dass** die Welle (5; 25) des Verbindungselementes etwa rhomboid ist mit einem derartig abgerundeten rautenförmigen Querschnitt, dass das Verbindungselement nur um einen vorbestimmten Betrag verdreht werden kann.

21. Verbindungsmittel nach einem der Ansprüche 2 bis 20, **dadurch gekennzeichnet, dass** der Verriegelungskopf (5) im Querschnitt etwa kreisförmig ist.

22. Verfahren zum Koppeln eines Bauteils (10; 31) mit einem Trennwandelement (15; 29), bei dem das Bauteil (10, 31) an dem Verbindungselement (1; 22) befestigt wird, ein Verriegelungskopf (4; 23) des Verbindungselementes (1;22) in einem Kanal des Trennwandelementes (5; 29) positioniert wird, an einem an dem Verbindungselement (1; 22) angeformten Werkzeugangriffsmittel (3; 24) eingewirkt wird, um das Verbindungselement (1; 22) in eine verriegelte Position zu verdrehen, damit das Bauteil (10; 31) und das Trennwandelement (15; 29) miteinander verriegelt werden,
**dadurch gekennzeichnet, dass**
auf der Welle (15; 25), die den Verriegelungskopf (4; 23) und die Werkzeugangriffsmittel (3; 24) verbindet, vorgesehene Formelemente (9; 26) mit Schultern (17, 18) an dem Kanal in Angriff gebracht werden, wenn das Verbindungselement (1; 22) um einen vorbestimmten Betrag verdreht wird, so dass eine Verdrehung über diesen vorbestimmten Betrag hinaus verhindert wird.

23. Verfahren nach Anspruch 22, **dadurch gekennzeichnet, dass** das Bauteil (10) ein weiteres Trennwandelement ist, und dass das Verfahren folgende weiteren Schritte enthält: Positionieren des weiteren Trennwandelementes (10), Positionieren eines Lokalisierungskopfes (2) des Verbindungselementes (1) in einem Kanal des weiteren Trennwandelementes (10), wobei der Schritt des Positionierens eines Verriegelungskopfes (4) des Verbindungselementes (1) in einem Kanal des Trennwandelementes (15) das Positionieren des Kanals des Trennwandelementes (15) über einen Verriegelungskopf (4) des Verbindungselementes (1) einschließt.

24. Verfahren oder Kopplungsmittel nach einem der Ansprüche 1 bis 22, bei dem das Bauteil (31) ein Trennwandelement-Höhenjustierelement ist.

## Revendications

1. Moyens de couplage d'un article (10 ; 31) à un panneau (15 ; 29) de cloison, comprenant :
un canal prévu sur le panneau (15 ; 29) de cloison et comprenant des épaulements (17 ; 18) de canal ; et
un connecteur (1 ; 22) comprenant :
une partie (4 ; 23) de tête, qui peut être reçue dans le canal ;
des moyens (3 ; 24) de coopération avec un outil, qui peuvent entrer en coopération avec un outil (21) pour faire tourner le connecteur (1 ; 22) en le mettant dans une position verrouillée afin de verrouiller l'article (10 ; 30) au panneau (15 ; 29) de cloison ;
un arbre (5 ; 25) reliant la partie (4 ; 23) de tête et les moyens (3 ; 24) de coopération avec un outil ; et
des moyens (2 ; 28) de couplage du connecteur (1 ; 22) à l'article (10 ; 31) ;
**caractérisés par le fait que**
l'arbre (5 ; 25) comprend des conformations (9 ; 26) ayant des dimensions permettant un montant déterminé à l'avance de rotation du connecteur (1 ; 22) et empêchant une rotation au-delà de ce montant déterminé à l'avance par coopération des conformations (9 ; 26) avec les épaulements (17 ; 18).

2. Moyens de couplage suivant la revendication 1, dans lesquels l'article (10) est un autre panneau de cloison, la partie (4) de tête est une partie de tête de verrouillage, le connecteur (1) comprenant en outre une tête (2) de positionnement prévue à une extrémité de l'arbre (5) et qui peut être introduite et maintenue en un emplacement souhaité dans un canal de l'autre panneau (10) de cloison ; la tête (4) de verrouillage étant disposée à l'autre extrémité de l'arbre (5), le canal du panneau (15) peut être placé sur la tête (4) de verrouillage dans une direction sensiblement perpendiculaire au canal, les moyens (3) de coopération avec un outil étant prévus sur l'arbre (5) entre la tête (2) de positionnement et la tête (4) de verrouillage et pouvant coopérer avec un outil (21) pour faire tourner le connecteur (1) en le mettant dans une position verrouillée pour verrouiller les deux panneaux (10 ; 15) ensembles.

3. Moyens de couplage suivant la revendication 2, dans lesquels la tête (4) de verrouillage est de forme générale rectangulaire ou de forme générale en losange.

4. Moyens de couplage suivant la revendication 2 ou 3, dans lesquels la tête (4) de verrouillage comprend des moyens (8) de verrouillage, comprenant une ou plusieurs zones surélevées, formées sur la tête (2) de verrouillage, qui peuvent être mises en coopération avec une partie du canal du panneau (15) lorsque l'on fait tourner le connecteur (1).

5. Moyens de couplage suivant la revendication 4, dans lesquels les moyens (8) de verrouillage comprennent deux rampes opposées radialement et coopérant avec les deux épaulements (17 ; 18) du canal du panneau (15) lors de la rotation du connecteur (1) pour coincer progressivement la tête (4) de verrouillage dans le canal du panneau (15).

6. Moyens de couplage suivant l'une des revendications 2 à 5, dans lesquels la tête (2) de positionnement a des dimensions telles qu'elle s'adapte dans une partie intérieure large du canal de l'autre panneau (10) mais ne peut pas passer dans une partie (14) en fente plus étroite du canal de l'autre panneau (10) de cloison.

7. Moyens de couplage suivant la revendication 6, dans lesquels la tête (2) de positionnement comprend un élément d'une manière générale circulaire dont le diamètre est plus grand que la largueur de la partie (14) en fente du canal de l'autre panneau (10).

8. Moyens de couplage suivant l'une quelconque des revendications 2 à 7, dans lesquels il est ménagé un ajustement à frottement entre une partie de la tête (2) de positionnement et une partie du canal de l'autre panneau (10) .

9. Moyens de couplage suivant l'une quelconque des revendications 2 à 8, dans lesquels l'arbre (5) de connecteur (1) a des dimensions telles qu'il coopère à frottement avec la fente (14) d'entrée du canal de l'autre panneau (10) et retient ainsi la tête (2) de positionnement en position.

10. Moyens de couplage suivant l'une quelconque des revendications 2 à 5, dans lesquelles la tête (2) de positionnement à des moyens (8) de coopération, qui peuvent coopérer d'une manière sélective avec le canal de l'autre panneau (10) pour supporter le connecteur sur l'autre panneau (10).

11. Moyens de couplage suivant la revendication 10, dans lesquels la tête (2) de positionnement est conformée de manière à ce qu'elle puisse passer dans la fente (14) d'entrée du canal de l'autre panneau (10), suivant une orientation en rotation mais est piégée dans le canal suivant une autre orientation en rotation.

12. Moyens de couplage suivant la revendication 11, dans lesquels la tête (2) de positionnement est de forme généralement rectangulaire ou en forme généralement de losange.

13. Moyens de couplage suivant la revendication 12, dans lesquels l'axe de la tête (2) de positionnement et celui de la tête (4) de verrouillage sont décalés l'un de l'autre autour de l'axe de rotation du connecteur (1).

14. Moyens de couplage suivant l'une quelconque des revendications 10 à 13, dans lesquels les moyens (8) de coopération comprennent une ou plusieurs zones surélevées formées sur la tête (2) de positionnement, qui sont mises en coopération avec une partie du canal de l'autre panneau (10) lorsque l'on fait tourner le connecteur (1).

15. Moyens de couplage suivant la revendication 14, dans lesquels les moyens (8) de coopération comprennent deux rampes opposées prévues sur la tête (2) de positionnement, qui coopèrent avec les deux épaulements (12 ; 13) du canal de l'autre panneau (10) par rotation pour coincer progressivement la tête (2) de positionnement dans le canal de l'autre panneau (10).

16. Moyens de couplage suivant l'une quelconque des revendications précédentes, dans lesquels les moyens (13) de coopération avec un outil comprennent un élément en forme générale d'écrou s'étendant vers l'extérieur à partir de l'arbre (5) du connecteur.

17. Moyens de couplage suivant la revendication 16, dans lesquels les moyens (3) de coopération avec un outil ont une forme générale hexagonale, carrée ou en losange.

18. Moyens de couplage suivant l'une quelconque des revendications 2 à 17, dans lesquels l'intervalle est prévu entre les moyens (3) de coopération avec un outil à la tête (2) de positionnement, l'intervalle ayant des dimensions telles qu'il donne un ajustement à frottement avec les épaulements (12 ; 13) du canal de l'autre panneau (10).

19. Moyens de couplage suivant l'une quelconque des revendications précédentes, dans lesquelles les conformations (9 ; 26) comprennent des prolongements qui donnent une section transversale qui s'allonge d'une manière générale le long d'un axe.

20. Moyens de couplage suivant la revendication 19, dans lesquels l'arbre (5 ; 25) du connecteur est de forme générale rhomboédrique ayant une section transversale en forme de losange arrondi, de sorte que le connecteur ne peut tourner que d'un montant déterminé à l'avance.

21. Moyens de couplage suivant l'une quelconque des revendications 2 à 20, dans lesquels la tête (5) de verrouillage est de section transversale d'une manière générale circulaire.

22. Procédé de couplage d'un article (10 ; 31) à un panneau (15 ; 29) de cloison, dans lequel on fixe l'article (10 ; 31) à un connecteur (1 ; 22), on met en position une tête (4 ; 23) de verrouillage du connecteur (1 ; 22) dans un canal du panneau (5 ; 29) de cloison, on fait coopérer des moyens (3 ; 24) de coopération avec un outil formé sur le connecteur (1 ; 22) pour faire tourner le connecteur (1 ; 22) et le mettre dans une position verrouillée pour verrouiller l'article (10 ; 31) et le panneau (15 ; 29) de cloison ensemble
**caractérisé en ce que**,
on fait coopérer des conformations (9 ; 26), prévues sur un arbre (15 ; 25) couplant la tête (4 ; 23) de verrouillage et les moyens (3 ; 24) de coopération avec un outil, avec des épaulements (17 ; 18) prévus sur le canal après rotation du connecteur (1 ; 22) d'un montant déterminé à l'avance de manière à empêcher une rotation au-delà de ce montant déterminé à l'avance.

23. Procédé selon la revendication 22, dans lequel l'article (10) est un autre panneau de cloison, comprenant en outre le stade dans lequel on met en position l'autre panneau (10) de cloison, on met en position une tête (2) de positionnement du connecteur (1) dans un canal de l'autre panneau (10) de cloison, le stade de mise en position d'une tête (4) de verrouillage du connecteur (1) dans un canal du panneau (15) de cloison comprenant la mise en position du canal du panneau (15) de cloison sur une tête (4) de verrouillage du connecteur (1).

24. Procédé ou moyens de couple suivant l'une quelconque des revendications 1 à 22 dans lequel ou dans lesquels l'article (31) est un dispositif d'ajustement en hauteur d'un panneau de cloison.
